# EUROPEAN PATENT SPECIFICATION

(11) **EP 1 462 427 B1**
(45) Date of publication and mention of the grant of the patent: **30.09.2015**
(21) Application number: 04007386.8
(22) Date of filing: 26.03.2004
(51) Int. Cl.: B01J 37/03, B01J 23/00, B01D 53/86, B01J 23/89, B01J 35/10, C01G 49/00, C01G 55/00, C01B 13/18, C04B 35/01, C04B 35/26

(54) **Method of producing a perovskite mixed oxide**
Herstellungsverfahren eines Perowskitmischoxids
Procédé de fabrication d'un oxyde complexe de type perovskite

(30) Priority: 28.03.2003 JP 2003090080; 28.11.2003 JP 2003398453
(43) Date of publication of application: 29.09.2004
(73) Proprietor: DOWA Electronics Materials Co., Ltd., Tokyo 101-0021 (JP)
(72) Inventor: Yano, Takuya, Chiyoda-ku Tokyo 100-8282 (JP); Suda, Hisashi, Chiyoda-ku Tokyo 100-8282 (JP)
(74) Representative: Wagner, Karl H.

(56) References cited:
- WO-A-2004/004899
- WO-A-2004/005194
- JP-A- 8 217 461
- JP-A- H06 106 062
- JP-A- H07 213 907

## Description

### BACKGROUND OF THE INVENTION

### Field of the Invention:

This invention relates to a perovskite complex oxide and a method of producing the perovskite complex oxide, particularly to a technology for low-cost industrial production of a highly active perovskite complex oxide type catalyst of relatively large specific surface area usable in applications such as chemiosynthesis and exhaust gas purification.

### Background Art:

The catalytic activity of an active metal component used as a catalytic material usually depends heavily on the magnitude of its specific surface area. The catalytic activity of an active metal component therefore improves with increasing fineness and increasing dispersion of the active metal component on its carrier, i.e., in proportion as its surface area increases.

A typical conventional method of achieving high dispersion of an active metal component on a carrier is to impregnate a carrier of high surface area with an active metal component compound salt solution, followed by drying and calcining. However, the fine active metal component particles supported on the carrier in this manner have a problem in that they are susceptible to deactivation owing to the fact that their large surface energy causes them to aggregate and experience sintering under long-term heating.

New methods for supporting a catalyst on a carrier have been attempted in recent years. In J. Soc. Powder Technol., Japan, 39, 662-69 (2002), Takehira reports preparing a perovskite oxide precursor into whose structure active metal component was uniformly dissolved in solid solution, and then heating and reducing the precursor to deposit the active metal component of the structure on the surface. The result is said to be stable and resistant to sintering because highly dispersed, ultra-fine particles are generated when metal present in the structure as ions is reduced and also because the ultra-fine particles generated in this manner exhibit strong affinity for the matrix.

This method was further developed and put into practice. Regarding perovskite catalyst obtained by dissolving a noble metal element constituting an active metal component into the structure of a rare earth element-transition element perovskite compound, Tanaka et al. report in Automotive Technology, 55.81-85 (2001) that a catalyst developed by utilizing fluctuation between reduction and oxidation atmospheres in vehicle exhaust gas to repeatedly subject active metal component to "fine and high-dispersion precipitation" and "solid solution into the perovskite lattice" does not experience sintering or sintering-induced deactivation even when exposed to a high temperature. Such a perovskite complex oxide having active metal component in its structure in solid solution can offer a catalytic material that is excellent in activity and durability. Moreover, the performance of the noble metal as an active metal component increases in proportion as the solid dissolution rate of the noble metal element increases.

A number of methods are known for producing perovskite complex oxide having a solid-solution active metal component in its structure. These include the process of impregnation, evaporation to dryness and calcining, the citric acid complex process, the cyanogen salt decomposition process, the freeze-dry process and other process commonly used for catalyst production. JP.Hei-8-217461A teaches a perovskite complex oxide having solid-solution noble metal in its structure that is obtained by hydrolyzing an alkoxide starting material in a noble metal salt compound solution.

The prior art set out in the foregoing has the following problem. Namely, the noble metal element used as the active component, typically Pd, produces a stable complex that precipitates only very sparingly, which makes it extremely difficult to achieve solid solution in the perovskite complex oxide structure by a wet process, i.e., by an inexpensive production method such as co-precipitation. When the method used to put the active metal component into solid solution in the perovskite complex oxide structure is conducted by the conventional sequence of operations of impregnation, evaporation to dryness and calcining, the calcining and crystallization have to be carried out at a high temperature of around 1000 °C (see, for example, JP-Sho50-83295A and JP-Sho50-78567A). Since the specific surface area of the perovskite complex oxide constituting the carrier therefore decreases, the high activity desired during use as a catalyst cannot be realized.

The citric acid decomposition process, cyanogen salt decomposition process, freeze-dry process, alkoxide process and the like were developed to overcome this problem. These processes enable production of a perovskite complex oxide at temperatures in the range of 500 - 700 °C, thus making it possible to obtain a perovskite complex oxide with large specific surface area. However, the citric acid complex process is difficult to apply industrial high-volume production because the product experiences extraordinary volume expansion during drying and calcining, the cyanogen salt decomposition process requires use of a toxic cyanogen salt as the starting material, the freeze-dry process requires complex equipment owing to the need for low-temperature, low-pressure treatment, and the alkoxide process requires a highly expensive metal alkoxide as the starting material. From this it can be seen that all of these methods have problems regarding industrial utilization from the points of environmental protection and/or cost.

WO 2004/005194 A shows a process by which a perovskite-type composite oxide can be industrially produced at a low heat treatment temperature. In the process of producing the perovskite-type composite oxide, organic metal salts of all the elements to be the components of the perovskite-type composite oxide are mixed together to prepare a precursor for the perovskite-type composite oxide. Alternatively, organic metal salts of part of the elements to be the components of the perovskite-type composite oxide are mixed with the remaining element(s) each prepared in the form of, e.g., an alkoxide, coprecipitation salt, or citric acid complex to prepare a precursor for the perovskite-type composite oxide. Thereafter, the precursor is heated to produce the perovskite-type composite oxide.

Further, WO2004/004899 A shows method for producing a catalyst for clarifying an exhaust gas. The method comprises preparing an uncrystallized composition containing the element components constituting a perovskite type composite oxide containing a noble metal, admixing the uncrystallized composition with a powder of θ-alumina and/or α-alumina to prepare a mixture, and then subjecting the mixture to a heat treatment. The method allows the perovskite type composite oxide to be carried on the powder of θ -alumina and/or α -alumina. A catalyst produced by the method has a perovskite type composite oxide, which can be commercially produced.

### SUMMARY OF THE INVENTION

In accordance with the present invention, a method of producing a perovskite complex oxide as set forth in claim 1 is provided. Further embodiments are ciaimed in the dependent claims.

An object of the present invention is therefore to provide a low-cost production method that does not involve use of toxic materials or generation of toxic substances and that simultaneously achieves high specific surface area of a perovskite complex oxide and solid dissolution of an active metal component in the structure thereof. Specifically, it is an object of the present invention to provide a method that provides a perovskite complex oxide material having a solid-solution active metal component present in its structure and having a large specific surface area, and that enables industrial-scale production of the material with good reproducibility.

To achieve this object, the present invention provides a method of producing a perovskite complex oxide containing a noble metal element comprising: a step of heat-treating a precursor substance containing at least one rare earth element and at least one transition metal element to generate a perovskite complex oxide phase, in which step an amorphous substance is used as the precursor substance and the noble metal element is incorporated in the amorphous substance. The amorphous substance in powdery state is slurried in a solvent containing ions of the noble metal element, the slurry is dried to impregnate the noble metal element into the amorphous substance, and the solid after drying is subjected to said heat treatment.

When the amorphous substance is slurried in the solvent containing the noble metal element ions, the slurry is adjusted to a pH of 6 or higher in co-presenting nitrate ions and ammonium ions therein. The mole ratio of the total amount of nitrate ions and ammonium ions to the total amount of rare earth element and transition metal element in the amorphous substance is greater than 0.6. The heat-treatment temperature for obtaining the perovskite complex oxide phase is preferably in the range of 400 - 700 °C, because this makes it possible to obtain a perovskite complex oxide having a large specific surface area.

The powdery amorphous substance can be produced by reacting an aqueous solution of a mineral acid salt of the rare earth element and a mineral acid salt of the transition metal element with a precipitant at a reaction temperature of 60 °C or lower and a pH of 6 or higher to form a precipitate and harvesting the precipitate. Also, the powdery amorphous substance can be produced by reacting an aqueous solution of a mineral acid salt of the rare earth element and a mineral acid salt of the transition metal element with a precipitant of ammonia and carbon dioxide, wherein the ammonia was added to the solution to neutralize and then carbon dioxide gas was blown into the solution.

By the foregoing method, the present invention enables production of a noble metal element-containing perovskite complex oxide including at least one rare earth element and at least one transition metal element, which contains the noble metal element in its crystal and has a BET specific surface area of greater than 10 m²/g. In addition, the so-obtained perovskite complex oxide obtained has at least 80% of the noble metal element contained therein dissolved in its crystal lattice in solid solution.

Owing to the fact that the perovskite complex oxide according to the present invention has the active metal component present in its structure in solid solution and has a large specific surface area, the active metal component can be deposited on the surface thereof in a reducing atmosphere so as to assume a fine and highly dispersed condition. As a result, a catalytic material can be obtained that exhibits high activity and high heat resistance unattainable heretofore.

### BRIEF DESCRIPITON OF THE DRAWINGS

Figure 1 shows the X-ray diffraction results obtained for the perovskite complex oxides produced at different heat treatment temperatures using the precursor substance of a reference example.
Figure 2 shows the X-ray diffraction results obtained for the perovskite complex oxide according to the present invention (Example 1) in comparison with those obtained for comparative examples.
Figure 3 shows the X-ray diffraction results obtained for the perovskite complex oxide of a comparative example (Comparative Example 1).

### DESCRIPTION OF THE PREFERRED EMBODIMENTS

The perovskite complex oxide according to the present invention can be represented by the general formula RTO₃ (where R is at least one rare earth element and T is at least one transition metal element), into which a noble metal element P is incorporated. Although the rare earth element R can, in a broad definition, be considered also to include transition metals, the transition metal element T as termed with respect to the present invention means a metal whose 3d electron orbit of the metal or metal ion is not filled with electrons and electrons jump between it and the 4s electron orbit, such as Ni, Co, Fe, Mn, Cr V, Ti, Cu and the like. Similarly, metals whose 4f electron orbit is not filled with electrons, such as Zr, Nb and the like, can also be included. The rare earth element R can be, but is not particularly limited to, Y, La, Ce, Nd, Sm, Pr or the like. Examples of the noble metal element P incorporated in accordance with the present invention include Pt, Pd, Ru, Rh and the like.

Having defined R, T and P as the principal components, it is possible to replace part of R and/or T with an alkali metal or an alkali earth metal. When producing a perovskite complex oxide having part of R and/or T replaced with an alkali metal or alkali earth metal, ions of the alkali metal and/or alkali earth metal are included in the solution for generating the precipitate, whereby, similarly to the foregoing, there can be obtained an amorphous precursor substance. Examples of the alkali metal and alkali earth metal include Li, K, Na, Mg, Sr, Ca, Ba and the like. In addition, support materials such as alumina, silica, titania, zirconia and the like or heat-resistant support materials such as complex oxides thereof can be added to the precursor substance so long as the amount of addition is within a range that does not impair the effect of the present invention. In this case, when the precursor substance is heat treated together with such a carrier substance, the perovskite complex oxide is obtained in a state carried on the support material.

One object of the present invention is to dissolve (substitute) the noble metal element efficiently into the structure (at the T sites) of the RTO₃ type perovskite complex oxide and another is to obtain the complex oxide in a state having a large specific surface area. In order to achieve the latter object of realizing a high specific surface area, the perovskite complex oxide phase must be crystallized at low temperature. Regarding this point, the object can be achieved by, as mentioned in the assignee's Japanese Patent Application No. 2003-090080 which was not published, conducting the heat treatment using an amorphous precursor substance. Moreover, it was learned that once suitably impregnated into the amorphous substance, the noble metal element can be dissolved into the structure in solid solution at a high ratio by the heat treatment.

The powdery "amorphous precursor substance" will be explained first. Earlier reported perovskite complex oxide reactions can be considered to be ones that pass through a crystalline intermediate substance such as a hydroxide, carbonate, nitrate, acetate, cyanate or oxide. When it is attempted to produce the desired perovskite complex oxide through the route of a crystalline intermediate substance, use of high-temperature heat treatment extending over a long period is inevitable. In the case of not passing through a crystalline intermediate substance, it should be possible to obtain a perovskite complex oxide by heat treatment at a low temperature. Focusing on this point, in the present invention, at the time of producing the perovskite (RTO₃) complex oxide phase by heat treating a precursor substance containing at least one rare earth element R and at least one transition metal element T, there is used as the precursor substance an amorphous substance containing the R and T components at the content ratio required for producing the complex oxide, i.e., an amorphous substance in its unmodified state having a broad X-ray diffraction image with no distinct peak present. The substance is preferably maintained in the amorphous state until it reaches the treatment temperature for obtaining the perovskite complex oxide.

The heat treatment of this amorphous substance directly produces the perovskite complex oxide without going through any crystalline intermediate substance like those mentioned above. Moreover, the perovskite complex oxide phase can be produced at a low treatment temperature of around 400 °C. Actually, the perovskite complex oxide phase can be generated without passing through a crystalline intermediate substance by heat treatment at a temperature of 400 °C - 700 °C.

The amorphous substance used as such a precursor substance can be obtained by precipitation from an aqueous solution containing R ions and T ions using a precipitant, i.e., by a wet process. Specifically, it can be obtained by reacting an aqueous solution of a mineral acid salt of R and a mineral acid salt of T with an alkaline carbonate at a reaction temperature not higher than 60 °C and pH in the range of 6 - 10, separating the so-obtained precipitate from the solution, and washing and drying the separated precipitate. Still more specifically, an aqueous solution containing a water-soluble nitrate, sulfate, chloride or other mineral acid salt of R and a water-soluble nitrate, sulfate, chloride or other mineral acid salt of T is prepared to have a mole ratio of R element(s) and T element(s) of about 1 : 1 (the number of R elements and/or T elements can be two or more, in which case the elements should be dissolved so that the mole ratio of all R elements and all T elements is about 1 : 1) and the precursor substance is precipitated from the solution using a precipitant. Although the mole ratio between the R element(s) and the T element(s) should ideally be made about 1 : 1, the perovskite complex oxide can be formed even if the mole ratio is not 1 : 1. Therefore, the mole ratio of the R element(s) and T element(s) can deviate from 1 : 1 insofar as it is a value enabling formation of the perovskite complex oxide.

The upper limit of the R and T ion concentrations in the solution to be precipitated is determined by the solubility of the salt(s) used. However, since a state in which no crystalline compound of R and/or T is precipitated is preferable, the total ion concentration of R and T is usually preferably within the approximate range of 0.01 - 0.60 mole/L.

A precipitant is used to produce the amorphous precipitate from the solution. Sodium carbonate, sodium hydrogencarbonate, ammonium carbonate, ammonium hydrogencarbonate and the like can be used as the precipitant. A base such as sodium hydroxide, ammonia or the like can also be added as required. After formation of the precipitate using an alkali such as sodium hydroxide or ammonia, an amorphous material that is a precursor of perovskite complex oxide of high specific surface area can be obtained by blowing in carbon dioxide gas. Specifically, the amorphous material can be obtained by blowing carbon dioxide gas into the solution after adding an aqueous ammonia to control the pH of the solution up to 6 or higher, preferably up to 10 or higher

For obtaining the amorphous precipitate, the pH is preferably controlled to 6 or higher, more preferably to the range of 6 - 11. A pH below 6 is unsuitable because in this pH region the rare earth element R may not form a precipitate. On the other hand, a pH exceeding 11 is unsuitable because in this pH region a crystalline precipitate of a hydroxide or the like may be formed without the precipitate formed becoming thoroughly amorphous. Further, for obtaining the amorphous precipitate, the reaction temperature should be set to not higher than 60 °C. A reaction temperature above 60 °C is not preferable because when the reaction is started in this temperature region, crystalline compound particles of the rare earth element R and/or transition metal element T may be generated that restrain the precursor substance from becoming thoroughly amorphous.

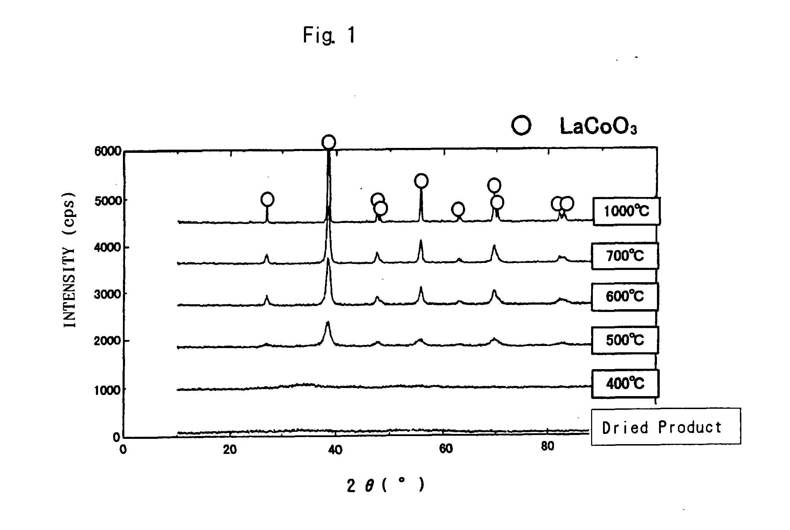

Figure 1 compares the X-ray diffraction patterns of heat-treated products in the case where the dried precipitate of Reference Example 1 was heat treated at different temperatures. The dried product before heat treatment was an amorphous substance with a broad pattern. It can be seen that it maintained its amorphous state even when heat treated at 400 °C and that a perovskite oxide phase of LaCoO₃ was produced from a relatively low temperature region of 500 °C.

As mentioned above, a powdery amorphous precursor substance can be produced. When a noble metal element is appropriately incorporated in this amorphous substance and the result is heat treated at 400 - 700 °C, there is obtained a perovskite complex oxide of high specific surface area and containing a noble metal element in its structure, i.e., the perovskite complex oxide aimed at by the present invention. The method of incorporating the noble metal element in the amorphous substance will now be explained. The list of usable noble metal elements includes Pt, Pd, Ru, Rh and the like. The amount of the noble metal element included is not particularly limited insofar as it is within the range that does not inhibit formation of the perovskite phase.

For incorporating the noble metal element in the amorphous substance, the present invention adopts the method of slurrying the powdery amorphous substance in a solution containing noble metal element ions and drying the slurry. At this time, it suffices to make nitrate ions and ammonium ions co-present in the slurry and to adjust the pH to 6 or higher. The mole ratio of the total amount of nitrate ions and ammonium ions to the total amount of rare earth element and transition metal element in the amorphous substance should be made greater than 0.6. A preferred method is set out in the following.

The slurrying of the amorphous substance in the solution containing noble metal element ions amounts to adding the powdery amorphous substance and a soluble salt of the noble metal to water, which operation is sufficient for actually preparing the slurry. At this time, nitrate ions and ammonium ions can be made co-present in the solution. The soluble salt of the noble metal element can be a water-soluble salt such as a nitrate or chloride but is not limited to these and any water-soluble salt that can supply the noble metal element ions can be used. The same applies regarding the nitrate and ammonium ions.

The slurry contains the amorphous substance as solid component and the noble metal element ions, nitrate ions and ammonium ions as components dissolved in the solution. As mentioned earlier, the amorphous substance constituting the solid component is preferably a powder separated from a solution as precipitate (what is obtained by washing and drying precipitate obtained from the solution by solid-liquid separation) but is not necessarily limited thereto. At the time of producing the amorphous precursor substance, if their nitrates were used as the rare earth element and transition metal element starting materials or nitric acid was added and a compound containing ammonia or ammonium ions was used as the precipitant, it is possible to obtain the desired slurry, without solid-liquid separation of the formed precipitant, by adding the compound of the noble metal soluble salt to the slurry containing the precipitant, i.e., to obtain a slurry containing the aforesaid amorphous substance (the precipitant) as solid component and noble metal element ions, nitrate ions and ammonium ions as components dissolved in the solution.

The amount of the nitrate ions and ammonium ions in the slurry containing the dispersed amorphous precursor substance is such that the mole ratio thereof with respect to the total number of moles of the transition metal element and rare earth element constituting the precursor substance is greater than 0.6. As also indicated later in Comparative Examples 4 and 5, at a mole ratio of less than 0.6, impurity phases tend to be generated in addition to the perovskite complex oxide phase at the ensuing heat treatment stage. Further, the pH of the slurry is preferably controlled to pH = 6, as pointed out earlier, so as to ensure stable presence of the amorphous substance in the slurry.

The slurry is next dried. As a rule, the drying process is one of evaporating water from the slurry (evaporation to dryness). A liquid-solid method of separating the liquid and solid phases such as filtering is not preferable. Drying processes that can be adopted include air drying, heat drying, vacuum drying, spray drying and the like. When required, the dried product can be subjected to pulverization and/or classification.

The solid obtained by the drying is next subjected to heat treatment for conversion to a perovskite complex oxide. The heat treatment temperature is not particularly limited. While any temperature that enables production of the perovskite complex oxide can be used, and a perovskite complex oxide can usually be obtained in the approximate range of 400 - 1000 °C, the temperature should be set as low as possible within this range so as to maintain the specific surface area at a high level. A heat treatment temperature in the range of 400 - 700 °C is therefore preferable. Atmospheric air or any oxidizing atmosphere can be used as the heat treatment atmosphere. The heat treatment can also be carried out in a nitrogen atmosphere or the like having an oxygen content that enables production of the perovskite complex oxide.

By the method of the present invention described in the foregoing, there can be obtained a perovskite complex oxide of large specific surface area whose structure contains an active metal component in solid solution. When this perovskite complex oxide is heated in a reducing atmosphere to deposit the active metal component on the surface thereof, the active metal component is deposited in a fine and highly dispersed condition, thus providing a catalytic material that exhibits high activity and high heat resistance.

### Examples

### Reference Example 1

Lanthanum nitrate and cobalt nitrate were mixed to obtain a mole ratio of elemental lanthanum to elemental cobalt of 1 : 1. A starting solution was prepared by adding water to this mixture in an amount that adjusted each of the elemental lanthanum and elemental cobalt present in the solution to a molar concentration of 0.2 mole/L. The temperature of the solution was adjusted to 25 °C under stirring. From the point the temperature reached 25 °C, addition of ammonium carbonate solution as precipitant was continued until the pH had been adjusted to 8. Next, precipitation was allowed to progress thoroughly by continuous stirring of the solution for 6 hours with the reaction temperature maintained at 25 °C. The precipitate obtained was harvested by filtering, washed with water, and dried at 110 °C. The so-obtained power was called a precursor powder.

The BET specific surface area of the obtained precursor powder was found to be 109.0 m²/g. The result obtained by X-ray powder diffraction of the precursor powder is shown as dried in Figure 1. From the broad, peakless diffraction spectrum exhibited, the precursor powder was concluded to be an amorphous material.

Next, the precursor powder was calcined by heat-treatment in an air atmosphere at 500 °C. The burned product was found to have a BET specific surface area of 49.3 m²/g and, as shown in Figure 1, was found by X-ray powder diffraction to be a perovskite oxide phase of LaCoO₃. The precursor powder was also subjected to the same heat-treatment at heat treatment at temperatures of 400 °C, 600 °C, 700 °C and 1000 °C. The X-ray powder diffraction results for the burned products obtained are also shown in Figure 1.

### Example 1

Lanthanum nitrate and iron nitrate were mixed to obtain a mole ratio of elemental lanthanum to elemental iron of 1 : 0.95. A starting solution was prepared by adding water to this mixture in an amount that adjusted the total of elemental lanthanum and elemental iron present in the solution to a molar concentration of 0.2 mole/L. The temperature of the solution was adjusted under stirring. At the point the temperature reached 25 °C, addition of ammonium carbonate solution as precipitant was continued until the pH had been adjusted to 10. Next, precipitation was allowed to progress thoroughly by continuous stirring of the solution for 6 hours with the reaction temperature maintained at 25 °C. The precipitate obtained was harvested by filtering, washed with water, and dried at 110 °C. The so-obtained power was called a precursor powder.

This precursor powder was added with ammonium nitrate at 9 times the total number of moles of the elemental lanthanum and elemental iron constituting the precursor powder, and with palladium nitrate solution in an amount that made the mole ratio of elemental lanthanum, elemental iron and elemental palladium 1 : 0.95 : 0.05. A slurry was then prepared by dispersing into the mixture an amount of pure water equal to 10 times the mixture weight and further adding ammonia water to adjust the pH to 10.

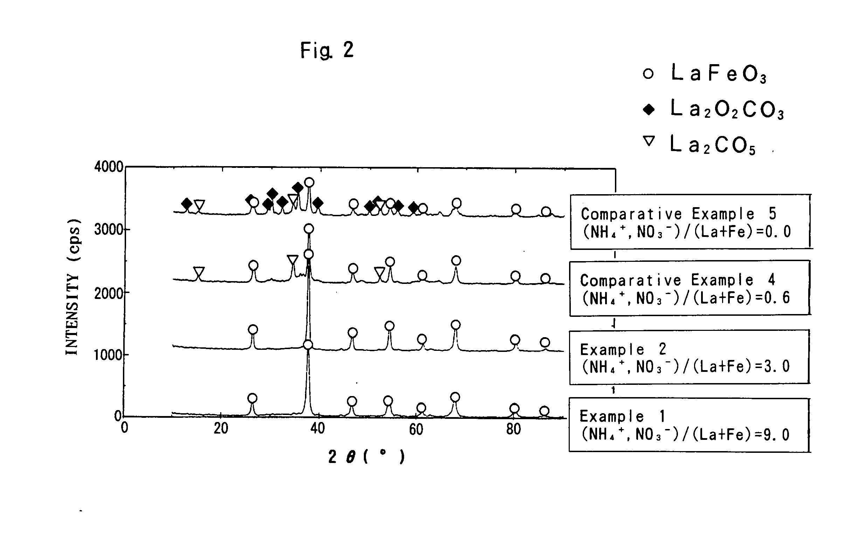

The slurry was placed into a rotary evaporator on a 110 °C oil bath and dried under reduced-pressure atmosphere for 12 hours. The dried product was calcined by heat-treatment in an air atmosphere at 600 °C. The burned product was found to have a BET specific surface area of 19.5 m²/g and, as shown in Figure 2, was found by X-ray powder diffraction to be a perovskite oxide phase of La(Fe_{0.95}Pd_{0.05})O₃.

The percentage of added palladium that entered the perovskite complex oxide in solid solution (the solid dissolution rate) was assessed. The assessment was done by the solution enrichment method described in Shokubai (Catalyst) Vol. 44, (2002) P108. According to this method, when the perovskite complex oxide is dissolved in a dilute acid, the palladium not in solid solution remains as a residual in the form of palladium oxide and the palladium in solid solution leaches out into the solution, so that the palladium solid dissolution rate can be assessed from the concentration of the leached noble metal element ion concentration. When the perovskite complex oxide of this Example was assessed by this method, the palladium solid dissolution rate was found to be 95.3%.

### Example 2

Example 1 was repeated, except that at the time of preparing the slurry, ammonium nitrate was mixed in at 3 times the total number of moles of the elemental lanthanum and elemental iron constituting the precursor powder. As shown in Figure 2, the burned product was found by X-ray powder diffraction to be a perovskite oxide of La(Fe_{0.95}Pd_{0.05})O₃. Its specific surface area was 13.7 m²/g. The palladium solid dissolution rate in the perovskite complex oxide was 92.8%.

### Example 3

Example 1 was repeated, except that lanthanum nitrate, strontium nitrate and iron nitrate were mixed in at amounts that made the mole ratio of elemental lanthanum, elemental strontium and elemental iron 0.8 : 0.2 : 0.95. The burned product was found by X-ray powder diffraction to be a perovskite oxide of La_{0.8}Sr_{0.2}(Fe_{0.95}Pd_{0.05})O₃. Its specific surface area was 17.2 m²/g. The palladium solid dissolution rate in the perovskite complex oxide was 89.7%.

### Example 4

Example 1 was repeated, except that lanthanum nitrate and cobalt nitrate were mixed in at amounts that made the mole ratio of elemental lanthanum and elemental cobalt 1 : 0.95. The burned product was found by X-ray powder diffraction to be a perovskite oxide of La(Co_{0.95}Pd_{0.05})O₃. Its specific surface area was 14.6 m²/g. The palladium solid dissolution rate in the perovskite complex oxide was 95.9%.

### Example 5

Example 1 was repeated, except that lanthanum nitrate and manganese nitrate were mixed in at amounts that made the mole ratio of elemental lanthanum and elemental manganese 1 : 0.95. The burned product was found by X-ray powder diffraction to be a perovskite oxide of La(Mn_{0.95}Pd_{0.05})O₃. Its specific surface area was 16.7 m²/g. The palladium solid dissolution rate in the perovskite complex oxide was 99.2%.

### Comparative Example 1

A precipitate was produced in the manner of Example 1, except that addition of sodium hydroxide as precipitant was continued until the pH had been adjusted to 12. The precipitate obtained was harvested by filtering, washed with water, and dried. The so-obtained precursor power was calcined at 700 °C to obtain a perovskite complex oxide single phase. On the other hand, a solution was prepared by dissolving into an amount of pure water equal to 10 times the weight of the heat-treated product and amount of palladium nitrate to make the mole ratio of elemental lanthanum, elemental iron and elemental palladium 1 : 0.95 : 0.05, and further adjusting the pH thereof to 7 with ammonia water so as not to dissolve the perovskite complex oxide. A slurry was prepared by dispersing the heat-treated product in this solution.

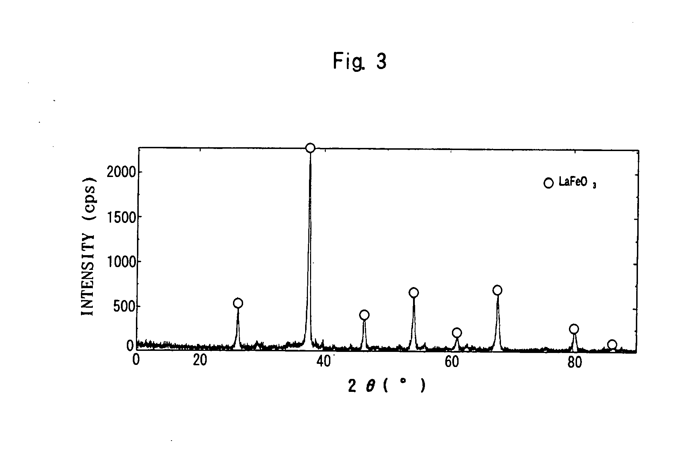

The slurry was placed into a rotary evaporator on a 110 °C oil bath and dried under reduced-pressure atmosphere for 12 hours. The dried product was calcined by heat-treatment in an air atmosphere at 600 °C. As shown in Figure 3, the burned product was found by X-ray powder diffraction to be a perovskite oxide of La(Fe_{0.95}Pd_{0.05})O₃. Its specific surface area was 17.0 m²/g. The palladium solid dissolution rate in the perovskite complex oxide was 57.0%.

### Comparative Example 2

Comparative Example 1 was repeated, except that lanthanum nitrate and cobalt nitrate were mixed in at amounts that made the mole ratio of elemental lanthanum and elemental cobalt 1 : 0.95. The burned product was found by X-ray powder diffraction to be a perovskite oxide of La(Co_{0.95}Pd_{0.05})O₃. Its specific surface area was 20.5 m²/g. The palladium solid dissolution rate in the perovskite complex oxide was 68.7%.

### Comparative Example 3

Comparative Example 1 was repeated, except that lanthanum nitrate and manganese nitrate were mixed in at amounts that made the mole ratio of elemental lanthanum and elemental manganese 1 : 0.95. The burned product was found by X-ray powder diffraction to be a perovskite oxide of La(Mn_{0.95}Pd_{0.05})O₃. Its specific surface area was 14.3 m²/g. The palladium solid dissolution rate in the perovskite complex oxide was 60.9%.

### Comparative Example 4

Example 1 was repeated, except that at the time of preparing the slurry, ammonium nitrate was mixed in at 0.6 times the total number of moles of the elemental lanthanum and elemental iron constituting the precursor powder. As shown in Figure 2, it was found by X-ray powder diffraction of the burned product that, in addition to a perovskite oxide of La(Fe_{0.95}Pd_{0.05})O₃, there was also formed an impurity phase of La₂CO₅ structure. The specific surface area of the burned product was 14.1 m²/g. The palladium solid dissolution rate in the perovskite complex oxide was 99.9%.

### Comparative Example 5

Example 1 was repeated, except that no ammonium nitrate was added at the time of preparing the slurry. As shown in Figure 2, it was found by X-ray powder diffraction that, in addition to a perovskite oxide of La(Fe_{0.95}Pd_{0.05})O₃, there were also formed impurity phases of La₂CO₅ and La₂O₂CO₃ structure. The specific surface area was 17.6 m²/g. The palladium solid dissolution rate in the perovskite complex oxide was 80.2%.

**Table 1**

| | | Specific surface area (m²/g) | Pd solid dissolution rate (%) |
|---|---|---|---|
| LaFe_{0.95}Pd_{0.05}O₃ | Example 1 | 19.5 | 95.3 |
| | Comparative Example 1 | 17.0 | 57.0 |
| LaCo_{0.95}Pd_{0.05}O₃ | Example 4 | 14.6 | 95.9 |
| | Comparative Example 2 | 20.5 | 68.7 |
| LaMn_{0.95}Pd_{0.05}O₃ | Example 5 | 16.7 | 99.2 |
| | Comparative Example 3 | 14.3 | 60.9 |

**Table 2**

| | (NH₄⁺,NO₃⁻)/ (La+Fe) ratio | Specific surface area (m²/g) | Pd solid dissolution rate (%) | X-ray powder diffraction result |
|---|---|---|---|---|
| Comparative Example 5 | 0.0 | 17.6 | 80.2 | LaFeO₃+La₂CO₅+La₂O₂CO₃ |
| Comparative Example 4 | 0.6 | 14.1 | 99.0 | LaFeO₃+La₂CO₅ |
| Example 2 | 3.0 | 13.7 | 92.8 | LaFeO₃ |
| Example 1 | 9.0- | 19.5 | 95.3 | LaFeO₃ |

Table 1 compares the results for the same-system perovskite complex oxides of Example 1 and Comparative Example 1, Example 4 and Comparative Example 2, and Example 5 and Comparative Example 3. Regardless of which Comparative Example comparison is made with, the perovskite complex oxides of the Examples, while having similar specific surface areas, exhibit very much higher solid dissolution rates of the noble metal. They are therefore highly suitable as catalytic materials. Table 2 shows the results for Examples 1 and 2 and Comparative Examples 4 and 5. It can be seen that when the ratio of the total amount of nitrate ions and ammonium ions to the total number of moles of the rare earth element and transition metal element constituting the precursor substance is 0.6 or less, the Pd solid dissolution rate is high but impurity phases like La₂CO₅, La₂O₂CO₃ and the like are formed. Performance as a catalyst is degraded in this case. From this it can be seen that amount of nitrate ions and ammonium ions added at the time of active metal component solid dissolution treatment should be greater than 0.6 times the total number of moles of the transition metal element and rare earth element constituting the precursor substance.

### Example 6

Example 1 was repeated except that the precursor powder was added with dinitrodiamino platinum in an amount that made the mole ratio of elemental lanthanum, elemental iron and elemental platinum 1 : 0.95 : 0.05. The burned product was found by X-ray powder diffraction to be a perovskite oxide of La(Fe_{0.95}Pt_{0.05})O₃. Its specific surface area was 17.3 m²/g. The platinum solid dissolution rate in the perovskite complex oxide was 97.3%.

### Example 7

Example 1 was repeated except that the precursor powder was added with rhodium nitrate solution in an amount that made the mole ratio of elemental lanthanum, elemental iron and elemental rhodium 1 : 0.95 : 0.05. The burned product was found by X-ray powder diffraction to be a perovskite oxide of La(Fe_{0.95}Rh_{0.05})O₃. Its specific surface area was 14.4 m²/g. The rhodium solid dissolution rate in the perovskite complex oxide was 92.0%.

### Example 7

Example 1 was repeated except that aqueous ammonia was used as the precipitant and added to the solution up to the pH of the solution being reached to 10, then carbon dioxide gas was blown into the solution at the flow rate of 900 mL/min. The burned product was found by X-ray powder diffraction to be a perovskite oxide of La(Fe_{0.95}Pd_{0.95})O₃. Its specific surface area was 15.4 m²/g. The palladium solid dissolution rate in the perovskite complex oxide was 97.1%.

### Example 9

Example 8 was repeated except that 1) palladium nitrate was mixed with the slurry in an amount that made the mole ratio of elemental lanthanum, elemental iron and elemental palladium 1 : 0.95 : 0.05, and 2) the slurry as obtained was placed without filtration into the rotary evaporator on a 110 °C oil bath and dried under reduced-pressure atmosphere for 12 hours. The burned product was found by X-ray powder diffraction to be a perovskite oxide of La(Fe_{0.95}Pd_{0.05})O₃. Its specific surface area was 15.8 m²/g. The palladium solid dissolution rate in the perovskite complex oxide was 99.1%.

## Claims

1. A method of producing a perovskite complex oxide containing a noble metal element comprising a step of heat-treating a precursor substance containing at least one rare earth element and at least one transition metal element to generate a perovskite complex oxide phase, **characterized in that** an amorphous substance is used as the precursor substance, the amorphous substance in powdery state is slurried in a solvent containing ions of the noble metal element, the slurry is dried to impregnate the noble metal element into the amorphous substance, and the solid after drying is subjected to said heat treatment, wherein when the amorphous substance is slurried in the solvent containing the noble metal element ions, the slurry is adjusted to a pH of 6 or higher in co-presenting nitrate ions and ammonium ions therein, and the mole ratio of the total amount of nitrate ions and ammonium ions to the total amount of rare earth element and transition metal element in the amorphous substance is greater than 0.6..

2. The method of production according to claim 1, wherein the heat-treatment temperature is in the range of 400 - 700 °C.

3. The method of production according to claim 1 or 2, wherein the amorphous substance is a precipitation product produced by reacting an aqueous solution of a mineral acid salt of the rare earth element and a mineral acid salt of the transition metal element with a precipitant at a reaction temperature of 60 °C or lower and a pH of 6 or higher.

## Patentansprüche

1. Verfahren zum Erzeugen eines Oxids des Perovskit-Komplexes, welches ein Edelmetallelement enthält, welches einen Schritt aufweist, eine Precursor- bzw. Ausgangssubstanz, die zumindest ein Seltene-Erden-Element und zumindest ein Übergangsmetallelement enthält, wärmezubehandeln, um eine Oxidphase des Perovskit-Komplexes zu erzeugen, **dadurch gekennzeichnet, dass** eine amorphe Substanz als Precursor-Substanz verwendet wird, wobei die amorphe Substanz im pulvrigen Zustand in einem Lösungsmittel zu einer Schlämmung gemacht wird, die Ionen eines Edelmetallelementes enthält, wobei die Schlämmung getrocknet wird, um das Edelmetallelement in die amorphe Substanz zu imprägnieren, und wobei der Festkörper nach dem Trocknen der Wärmebehandlung unterworfen wird, wobei, wenn die amorphe Substanz in dem Lösemittel, das die Edelmetallelement-Ionen enthält, zu einer Schlämmung gemacht wird, die Schlämmung auf einen pH-Wert von 6 oder höher an darin ebenfalls vorhandenen Nitrat-Ionen und Ammonium-Ionen eingestellt wird, und wobei das Molverhältnis der Gesamtmenge der Nitrat-Ionen und der Ammonium-Ionen zur Gesamtmenge des Seltene-Erden-Elementes und des Übergangsmetallelementes in der amorphen Substanz größer als 0,6 ist.

2. Herstellungsverfahren nach Anspruch 1, wobei die Wärmebehandlungstemperatur im Bereich von 400 - 700°C ist.

3. Herstellungsverfahren nach Anspruch 1 oder 2, wobei die amorphe Substanz ein Ausscheidungsprodukt ist, welches durch Reagieren einer wässrigen Lösung eines Mineralsäuresalzes des Seltene-Erden-Elementes und eines Mineralsäuresalzes des Übergangsmetallelementes mit einem Ausscheidungsmittel bei einer Reaktionstemperatur von 60°C oder weniger und bei einem pH-Wert von 6 oder mehr erzeugt wird.

## Revendications

1. Procédé de fabrication d'un oxyde complexe de type pérovskite contenant un élément de métal noble, comprenant une étape de traitement thermique d'une substance précurseur contenant au moins un élément de terre rare et au moins un élément de métal de transition pour produire une phase d'un oxyde complexe de type pérovskite, **caractérisé en ce qu'**une substance amorphe est utilisée comme substance précurseur, la substance amorphe à l'état poudreux est mise en boue dans un solvant contenant des ions de l'élément de métal noble, la boue est séchée pour imprégner l'élément de métal noble dans la substance amorphe, et le solide après séchage est soumis à un traitement thermique, dans lequel, quand la substance amorphe est mise en boue dans le solvant contenant les ions de l'élément de métal noble, la boue est réglée à un pH de 6 ou plus dans des ions de nitrate coprésents avec des ions d'ammonium, et le rapport molaire de la quantité totale d'ions nitrate et d'ions ammonium par rapport à la quantité totale d'élément de terre rare et d'élément de métal de transition dans la substance amorphe est supérieur à 0,6.

2. Procédé de fabrication selon la revendication 1, dans lequel la température du traitement thermique est dans une plage de 400 à 700°C.

3. Procédé de fabrication selon la revendication 1 ou 2, dans lequel la substance amorphe est un produit de précipitation obtenu en faisant réagir une solution aqueuse d'un sel acide minéral de l'élément de terre rare et d'un sel acide minéral de l'élément de métal de transition avec un produit de précipitation à une température de réaction de 60°C ou moins et un pH de 6 ou plus.
